# EUROPEAN PATENT APPLICATION

(11) **EP 4 564 835 A1**
(43) Date of publication of application: **04.06.2025**
(21) Application number: 23831762.2
(22) Date of filing: 12.06.2023
(51) Int. Cl.: H04N 21/485, H04N 21/81, H04N 21/478, G06F 9/445, H04N 21/431, H04N 21/4782, H04N 21/482

(54) **DISPLAY DEVICE AND OPERATING METHOD THEREOF**

(30) Priority: 28.06.2022 KR 20220079241; 28.12.2022 KR 20220187765
(71) Applicant: Samsung Electronics Co., Ltd., Suwon-si, Gyeonggi-do 16677 (KR)
(72) Inventor: PARK, Hyeeun, Suwon-si, Gyeonggi-do 16677 (KR); KIM, Sehyun, Suwon-si, Gyeonggi-do 16677 (KR); SHIN, Yongwoo, Suwon-si, Gyeonggi-do 16677 (KR); LEE, Jongin, Suwon-si, Gyeonggi-do 16677 (KR); CHOI, Kilsoo, Suwon-si, Gyeonggi-do 16677 (KR)
(74) Representative: Walaski, Jan Filip
(86) International application number: PCT/KR2023/008043
(87) International publication number: WO 2024/005402

(57) **Abstract**

Provided are a display device and an operating method thereof. The display device is configured to identify whether a first category hub application providing one or more applications belonging to a first category is activated, provide a specified user input interface for an item representing a first application received and installed from a server according to an application download request, identify, in response to receiving an input for selecting the specified user input interface, whether the first application corresponds to the first category, and provide, in response to identifying that the first category hub application is activated and that the first application corresponds to the first category, an item for starting execution of the first application to the first category hub application.

## Description

### Technical Field

The disclosure relates to a display device and an operating method thereof, and for example, to a display device and an operating method thereof for managing an application installed on the display device.

### Background Art

A display device such as a television (TV) is mainly used as a device for watching media. An application for watching media may be installed on a smart TV. After installing an application on a TV according to a user's selection, the TV may execute the installed application in response to selecting an item corresponding to the installed application.

### Disclosure of Invention

### Solution to Problem

According to an embodiment, a display device may include: a memory storing one or more instructions and a processor configured to execute the one or more instructions stored in the memory. According to an embodiment, the processor may be configured to execute the one or more instructions to identify whether a first category hub application providing one or more applications belonging to a first category is activated. According to an embodiment, the processor may be configured to execute the one or more instructions to provide a specified user input interface for an item representing a first application received and installed from a server according to an application download request. According to an embodiment, the processor may be configured to execute the one or more instructions to identify, in response to receiving an input for selecting the specified user input interface, whether the first application corresponds to the first category. According to an embodiment, the processor may be configured to execute the one or more instructions to provide, in response to identifying that the first category hub application is activated and that the first application corresponds to the first category, provide an item for starting execution of the first application to the first category hub application.

According to an example embodiment, an operating method of a display device may include identifying whether a first category hub application providing one or more applications belonging to a first category is activated. According to an embodiment, the operating method may include providing a specified user input interface for an item representing a first application received and installed from a server according to an application download request. According to an embodiment, the operating method may include identifying, in response to receiving an input for selecting the specified user input interface, whether the first application corresponds to the first category. According to an embodiment, the operating method may include providing, in response to identifying that the first category hub application is activated and that the first application corresponds to the first category, an item for starting execution of the first application to the first category hub application.

According to an embodiment, a computer-readable recording medium may have recorded thereon one or more programs executed by a processor of a display device to implement an operating method of the display device, the method including: identifying whether a first category hub application providing one or more applications belonging to a first category is activated, providing a specified user input interface for an item representing a first application received and installed from a server according to an application download request, identifying, in response to receiving an input for selecting the specified user input interface, whether the first application corresponds to the first category, and providing, in response to identifying that the first category hub application is activated and that the first application corresponds to the first category, an item for starting execution of the first application to the first category hub application.

### Brief Description of Drawings

The present disclosure may be easily understood through the following detailed description and the accompanying drawings, in which reference numerals refer to various elements. Further, the above and other aspects, features and advantages of certain embodiments of the present disclosure will be more apparent from the following detailed description, taken in conjunction with the accompanying drawings, in which:
FIG. 1 is a diagram illustrating an example operation of a server device and a display device according to various embodiments;
FIG. 2 is a block diagram illustrating an example configuration of a display device according to various embodiments;
FIG. 3 is a block diagram illustrating an example configuration of a display device according to various embodiments;
FIG. 4 is a diagram illustrating an example screen provided by a display device according to various embodiments;
FIG. 5 is a diagram illustrating an example user interface for managing one or more applications downloaded and installed according to various embodiments;
FIG. 6 is a flowchart illustrating an example method of operating a display device according to various embodiments;
FIG. 7 is a diagram illustrating an example initial setting screen according to various embodiments;
FIG. 8 is a diagram illustrating an example home screen of a display device for providing a game hub application in which a first category is a game, according to various embodiments; and
FIG. 9 is a diagram illustrating an example gaming hub screen that may be displayed when a game home item is selected, according to various embodiments.

### Mode for the Invention

Terms used herein will be briefly described and then the present disclosure will be described in detail.

The terms used herein are those general terms currently widely used in the art in consideration of functions in the present disclosure, but the terms may vary according to the intentions of those of ordinary skill in the art, precedents, or new technology in the art. Also, in some cases, there may be terms that are arbitrarily selected, and the meanings thereof will be described in detail in the corresponding portions of the present disclosure. Thus, the terms used herein should be understood not as simple names but based on the meanings of the terms and the overall description of the present disclosure.

Throughout the present disclosure, when something is referred to as "including" an element, one or more other elements may be further included unless otherwise specified. As used herein, the terms such as "units" and "modules" may refer to units that perform at least one function or operation, and the units may be implemented as hardware or software or a combination of hardware and software.

Hereinafter, various example embodiments will be described in greater detail with reference to the accompanying drawings. However, the present disclosure may be embodied in many different forms and should not be understood as being limited to the various example embodiments set forth herein. Portions irrelevant to the description of the present disclosure may be omitted in the drawings for a clear description of the present disclosure, and like reference numerals will denote like elements throughout the disclosure.

As used herein, the term "user" may refer to a person controlling a function or operation of a computing device or an electronic device using a control device and may include a viewer, a manager, or an installer.

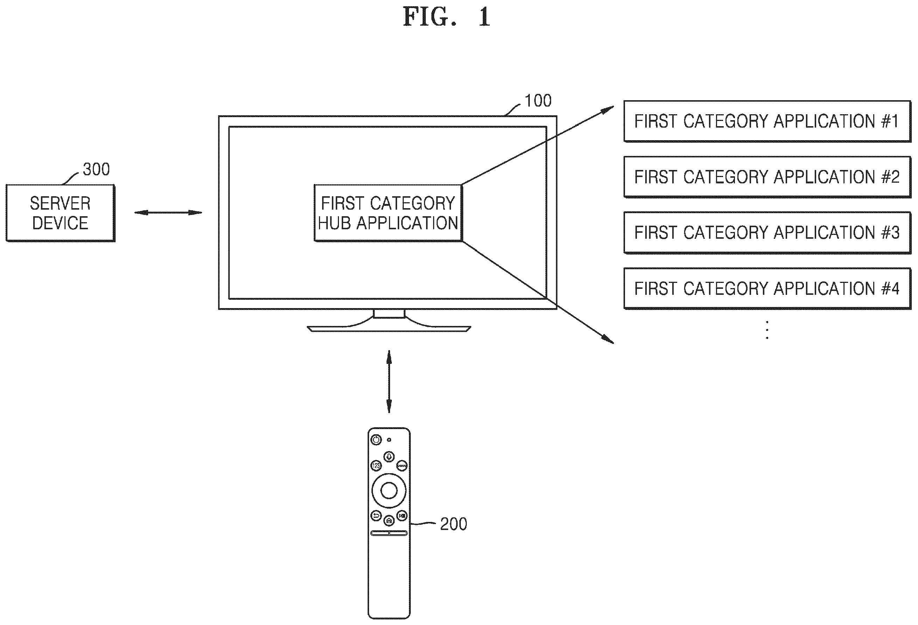

FIG. 1 is a diagram illustrating an example operation of a server device and a display device according to various embodiments.

Referring to FIG. 1, a server device 300 may provide a content application to a display device 100 according to a request from the display device 100. For example, when the server device 300 receives a download request for a game application from the display device 100, the server device 300 may transmit the game application to the display device 100 such that the game application may be downloaded and installed on the display device 100.

The display device 100 may transmit a download request for a content application to the server device 300 and may receive and store the content application from the server device 300 according to the download request.

Referring to FIG. 1, the display device 100 may provide a first category hub application, and the first category hub application may provide one or more applications corresponding to a first category, that is, a first category application #1, a first category application #2, a first category application #3, a first category application #4, and/or the like. That the first category hub application provides the first category application #1 may refer, for example, to the first category hub application providing or displaying an item for starting execution of the first category application #1.

According to an embodiment, the display device 100 may provide a first category hub application. The first category hub application may refer to an application that functions as a hub to manage one or more applications whose types or attributes correspond to the first category. The display device 100 may download and store applications with various attributes or types from the server device 300 and may provide a first category hub application that separately manages an application corresponding to the first category, among the applications with various attributes or types. When the first category hub application is selected, the display device 100 may display a user interface including items enabling execution of one or more applications corresponding to the first category. For example, when the first category is a game, the display device 100 may provide a game hub application for managing one or more applications whose types or attributes correspond to a game, among the downloaded and received applications. When the game hub application is selected, the display device 100 may display a user interface including items enabling execution of one or more applications corresponding to the game. The category may be identified in various ways with reference to the attributes or types of applications, and the game may be an example. Also, the display device 100 may provide not only the first category hub application but also a plurality of hub applications such as a second category hub application and a third category hub application, based on the attributes or types of applications to be managed by the display device 100. For example, the second category hub application may be a movie hub application, and the third category hub application may be a music hub application. When a user wants to execute applications with similar attributes or types, the user may execute or manage applications with similar attributes or types on one platform by selecting the first category hub application.

According to an embodiment, for the applications downloaded and received from the server device 300, the display device 100 may provide a user interface for instructing to include an item for starting execution of the downloaded and received applications in the first category hub application. For example, when the display device 100 downloads and stores an application, the display device 100 not only may provide an item for starting execution of the downloaded and stored application but also may provide a user interface for asking whether to provide, as a submenu or subitem of the item, the item for starting execution of the application to the first category hub application when the application corresponds to the first category and provide the item for starting execution of the application to the first category hub application according to a user input for selecting the user interface. Providing an item for starting execution of an application to the first category hub application may refer, for example, to a user interface including an item for starting execution of an application corresponding to the first category being provided or displayed when the first category hub application is selected. As such, for the application downloaded and installed from server device 300, by providing a user interface for asking whether to provide the item to the first category hub application, it may be possible to allow the user to manage the applications corresponding to the first category through a single platform, that is, the first category hub application, thereby enabling convenient and concentrated use of the applications belonging to the same category.

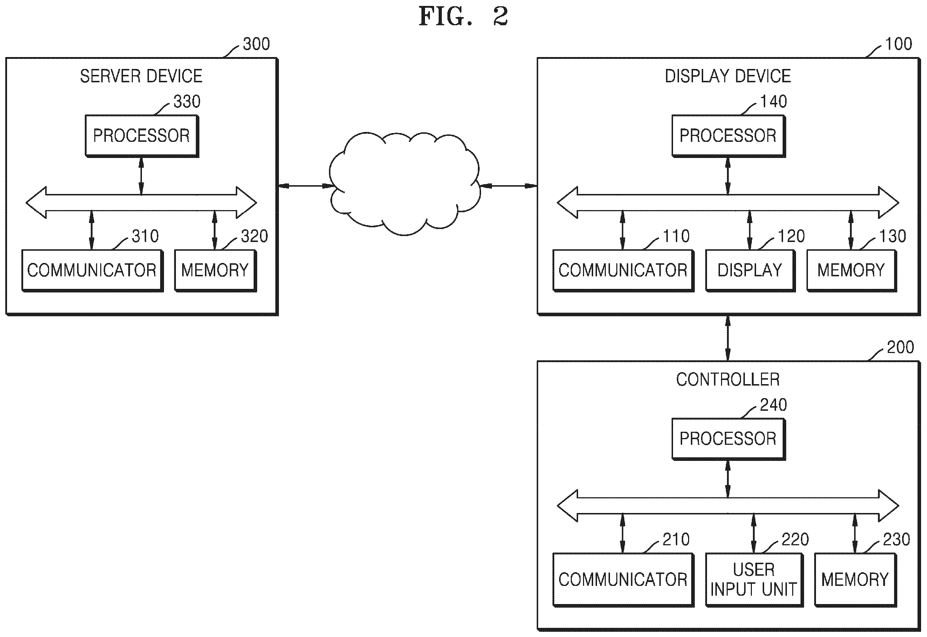

FIG. 2 is a block diagram illustrating an example configuration of a display device according to various embodiments.

Referring to FIG. 2, the system may include a display device 100, a controller 200, and a server device 300.

The display device 100 may be a device capable of displaying an image or data according to a user's request and may include a communicator 110, a display 120, a memory 130, and a processor 140.

The communicator 110 may include one or more modules for enabling wireless communication between the display device 100 and a wireless communication system or between the display device 100 and a network in which other devices are located. According to an embodiment, the communicator 110 may perform communication with the controller 200 according to short-range communication technology. The short-range communication technology may include, for example, Bluetooth communication, WiFi communication, and IR communication. According to an embodiment, the communicator 110 may perform communication with the server device 300 according to the Internet protocol.

The display 120 may output an image or data processed in the display device 100.

The memory 130 may store one or more programs for processing and controlling by the processor 140 and may store data that is input to the display device 100 or output from the display device 100. Also, the memory 130 may store data necessary for the operation of the display device 100.

The memory 130 may include at least one type of storage medium from among flash memory type, hard disk type, multimedia card micro type, card type memory (e.g., SD and XD memories), random-access memory (RAM), static random-access memory (SRAM), read-only memory (ROM), electronically erasable programmable read-only memory (EEPROM), programmable read-only memory (PROM), magnetic memory, magnetic disk, and optical disk.

The processor 140 may control an overall operation of the display device 100. For example, the processor 140 may perform the function of the display device 100 described herein by executing one or more instructions stored in the memory 130.

In an embodiment of the present disclosure, the processor 140 may store one or more instructions in an internal memory thereof and may execute the one or more instructions stored in the internal memory to perform control such that the operations of the display device are performed. That is, the processor 140 may perform a certain operation by executing at least one instruction or program stored in the internal memory of the processor 140 or in the memory 130.

According to an embodiment, the processor 140 may, for example, perform an operation of the display device 100 described herein by executing one or more instructions stored in the memory 130, but the disclosure is not limited thereto.

According to an embodiment, by executing the one or more instructions stored in the memory 130, the processor 140 may identify whether a first category hub application providing one or more applications belonging to a first category is activated.

According to an embodiment, by executing the one or more instructions stored in the memory 130, the processor 140 may provide a predetermined user input interface for an item representing a first application received and installed from a server according to an application download request.

According to an embodiment, by executing the one or more instructions stored in the memory 130, the processor 140 may identify, in response to receiving an input for selecting the predetermined user input interface, whether the first application corresponds to the first category.

According to an embodiment, by executing the one or more instructions stored in the memory 130, the processor 140 may provide, in response to identifying that the first category hub application is activated and that the first application corresponds to the first category, an item for starting execution of the first application to the first category hub application.

According to an embodiment, by executing the one or more instructions stored in the memory 130, the processor 140 may identify that the first category hub application is activated, when installation country information of the display device represents predetermined country information and/or the product model information of the display device represents predetermined model information.

According to an embodiment, by executing the one or more instructions stored in the memory 130, the processor 140 may identify whether the first application corresponds to the first category, based on the attribute information of the first application.

According to an embodiment, by executing the one or more instructions stored in the memory 130, the processor 140 may identify that the first application corresponds to the first category, when the attribute information of the first application corresponds to the first category.

According to an embodiment, by executing the one or more instructions stored in the memory 130, the processor 140 may identify that the first application corresponds to the first category, when the attribute information of the first application indicates that the first application provides metadata for content executable in the first category hub application to the first category hub application.

According to an embodiment, by executing the one or more instructions stored in the memory 130, the processor 140 may request the attribute information of the first application from the server and obtain the attribute information of the first application by receiving the attribute information of the first application from the server according to the request.

According to an embodiment, by executing the one or more instructions stored in the memory 130, the processor 140 may provide, in response to identifying that the first category hub application is not activated or that the first application does not correspond to the first category, an item for starting execution of the first application to a basic category hub application.

The display device 100 may receive, from the controller 200, a control signal for remotely controlling the display device 100 and perform an operation corresponding to the received control signal. For example, the display device 100 may receive, from the controller 200, a channel control, a volume control, and a control signal for controlling movement of items or menus included in a graphic user interface displayed on a display of the display device 100 and perform an operation corresponding to the received control signal.

The display device 100 may be any type of device that includes a processor and a memory to perform a function. The display device 100 may be a fixed or portable device. For example, the display device 100 may refer to a device that includes a display to display image content, video content, game content, graphic content, and the like. The display device 100 may output or display an image or content received from the server device 300. The display device 100 may include, for example, various types of electronic devices capable of receiving and outputting content, such as TVs such as network TVs, smart TVs, Internet TVs, Web TVs, and IPTVs, computers such as desktops, laptops, and tablets, and various smart devices such as smartphones, cellular phones, game players, music players, video players, medical equipment, and home appliances. The display device 100 may be referred to as a display device in terms of receiving and displaying content and may also be referred to as a content receiving device, a sink device, an electronic device, a computing device, or the like. However, it will be understood that the disclosure is not limited to these devices.

The block diagram of the display device 100 illustrated in FIG. 2 may be a block diagram according to an embodiment. Each component of the block diagram may be integrated, added, or omitted according to the specifications of the display device 100 that are actually implemented. For example, when necessary, two or more components may be combined into one component, or one component may be divided into two or more components. Also, a function performed in each block is to describe embodiments, and a particular operation or device thereof is not intended to limit the scope of the present disclosure.

The controller 200 will now be described in greater detail.

The controller 200 may include a communicator 210, a user input unit 220, a memory 230, and a processor 240. However, the controller 200 is not limited thereto and may include more components than the illustrated components.

The communicator 210 may include one or more modules for enabling wireless communication between the controller 200 and a wireless communication system or between the controller 200 and a network in which other devices are located. According to an embodiment, the communicator 210 may perform communication with the display device 100 according to short-range communication technology. The short-range communication technology may include, for example, Bluetooth communication, WiFi communication, and IR communication. According to an embodiment, the communicator 210 may perform communication with the server device 300 according to the Internet protocol.

The user input unit 220 may be any type of interface unit capable of receiving a user input. For example, the user input unit 220 may include an operation button arranged at a portion of the controller 200 to receive a user's input, a touch-sensitive display configured to sense a touch input, and/or a microphone configured to receive a user's voice input.

The memory 230 may store one or more programs for processing and controlling by the processor 240 and may store data that is input to the controller 200 or output from the controller 200.

The memory 230 may include at least one type of storage medium from among flash memory type, hard disk type, multimedia card micro type, card type memory (e.g., SD and XD memories), random-access memory (RAM), static random-access memory (SRAM), read-only memory (ROM), electronically erasable programmable read-only memory (EEPROM), programmable read-only memory (PROM), magnetic memory, magnetic disk, and optical disk.

The processor 240 may control an overall operation of the controller 200. For example, the processor 240 may perform the function of the controller 200 described herein by executing one or more instructions stored in the memory 230.

In an embodiment of the present disclosure, the processor 240 may store one or more instructions in an internal memory thereof and may execute the one or more instructions stored in the internal memory to perform control such that the above operations are performed. For example, the processor 240 may perform a certain operation by executing at least one instruction or program stored in the internal memory of the processor 240 or in the memory 230. However, it will be understood that the disclosure is not limited thereto.

According to an embodiment, by executing the one or more instructions stored in the memory 230, the processor 240 may perform a communication connection with the display device 100 using short-range wireless communication technology. The short-range wireless communication technology may include Bluetooth communication technology, WiFi Direct technology, and the like.

The controller 200 may be any type of device that includes a processor and a memory to perform a function. The controller 200 may include various electronic devices, such as a remote controller, a game controller, and a smartphone.

Moreover, the block diagram of the controller 200 illustrated in FIG. 2 may be a block diagram for an embodiment. Each component of the block diagram may be integrated, added, or omitted according to the specifications of the controller 200 that are actually implemented. For example, when necessary, two or more components may be combined into one component, or one component may be divided into two or more components. Also, a function performed in each block is to describe embodiments, and a particular operation or device thereof is not intended to limit the scope of the present disclosure.

The server device 300 will now be described in greater detail.

The server device 300 may include a communicator 310, a memory 320, and a processor 330. However, the server device 300 is not limited thereto and may include more components than the illustrated components. For example, the server device 300 may include a separate image processor for image processing of an application image executed in the server device 300.

The communicator 310 may include one or more modules for enabling wireless communication between the server device 300 and a wireless communication system or between the server device 300 and a network in which other devices are located. According to an embodiment, the communicator 310 may perform communication with the display device 100 according to the Internet protocol. According to an embodiment, the communicator 310 may perform communication with the controller 200 according to the Internet protocol.

The memory 320 may store one or more programs for processing and controlling by the processor 330 and may store data that is input to the server device 300 or output from the server device 300.

The memory 320 may include at least one type of storage medium from among flash memory type, hard disk type, multimedia card micro type, card type memory (e.g., SD and XD memories), random-access memory (RAM), static random-access memory (SRAM), read-only memory (ROM), electronically erasable programmable read-only memory (EEPROM), programmable read-only memory (PROM), magnetic memory, magnetic disk, and optical disk.

The processor 330 may control an overall operation of the server device 300. For example, the processor 330 may perform the function of the server device 300 described herein by executing one or more instructions stored in the memory 320.

In an embodiment of the present disclosure, the processor 330 may store one or more instructions in an internal memory thereof and may execute the one or more instructions stored in the internal memory to perform control such that the above operations are performed. That is, the processor 330 may perform a certain operation by executing at least one instruction or program stored in the internal memory of the processor 330 or in the memory 320.

According to an embodiment, by executing one or more instructions stored in the memory 320, the processor 330 may receive a download request for one or more applications from the display device 100 and transmit one or more applications to the display device 100 in response to the download request.

According to an embodiment, by executing one or more instructions stored in the memory 320, the processor 330 may receive a request for attribute information about one or more applications requested for download from the display device 100 and transmit the attribute information about the one or more applications to the display device 100 in response to the attribute information request.

The block diagram of the server device 300 illustrated in FIG. 2 may be a block diagram illustrating an example embodiment. Each component of the block diagram may be integrated, added, or omitted according to the specifications of the server device 300 that are actually implemented. For example, when necessary, two or more components may be combined into one component, or one component may be divided into two or more components. A function performed in each block is to describe embodiments, and a particular operation or device thereof is not intended to limit the scope of the present disclosure.

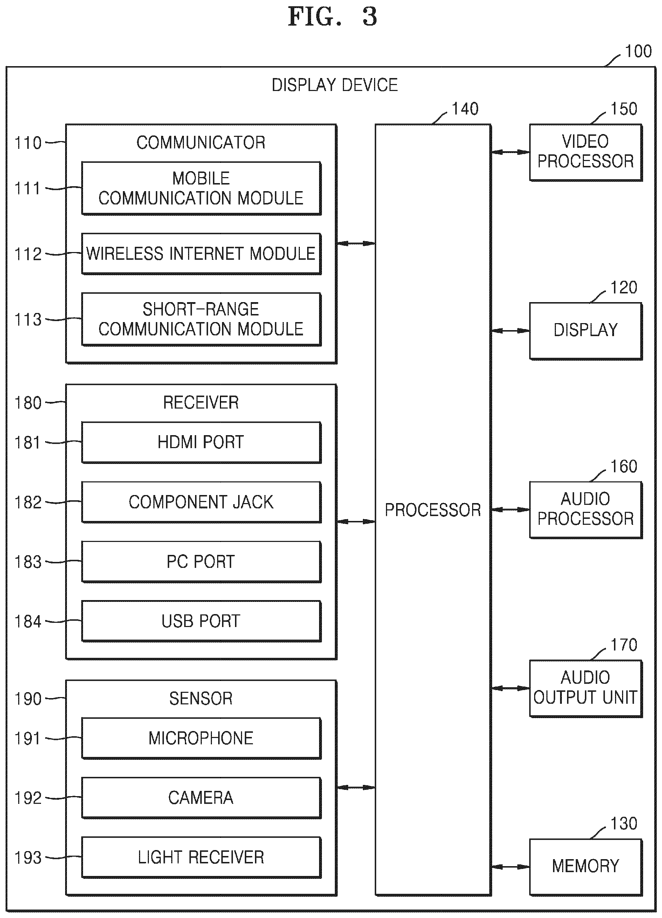

FIG. 3 is a block diagram illustrating an example configuration of a display device according to various embodiments.

Referring to FIG. 3, the display device 100 may include a video processor 150, an audio processor 160, an audio output unit 170, a receiver 180, and a sensor 190 in addition to a communicator 110, a display 120, a memory 130, and a processor 140.

The communicator 110 may include one or more modules for enabling wireless communication between the display device 100 and a wireless communication system or between the display device 100 and a network in which other electronic devices are located. For example, the communicator 110 may include a mobile communication module 111, a wireless Internet module 112, and a short-range communication module 113.

The mobile communication module 111 may transmit/receive wireless signals to/from at least one of a base station, an external terminal, or a server on a mobile communication network. The wireless signals may include voice call signals, video call signals, or various types of data according to transmission/reception of text/multimedia messages.

The wireless Internet module 112 may refer to a module for wireless Internet access and may be installed inside or outside a device. Wireless LAN (WLAN) (WiFi), Wireless broadband (WiBro), World Interoperability for Microwave Access (WiMAX), High Speed Downlink Packet Access (HSDPA), or the like may be used as wireless Internet technology. Through the wireless Internet module 122, the device may establish a WiFi peer-to-peer (P2P) connection with another device.

The short-range communication module 113 may refer to a module for short-range communication. Bluetooth, Bluetooth Low Energy (BLE), Radio Frequency Identification (RFID), Infrared Data association (IrDA), Ultra Wideband (UWB), ZigBee, or the like may be used as short-range communication technology.

The display 120 may display, on the screen, a video signal received from the server device 300.

The memory 130 may store a program related to the operation of the display device 100 and various data generated during the operation of the display device 100.

The memory 130 may store at least one instruction. Also, the memory 130 may store at least one instruction executed by the processor 140. Also, the memory 130 may store at least one program executed by the processor 140. Also, the memory 130 may store an application for providing a certain service.

For example, the memory 130 may include at least one type of storage medium from among flash memory type, hard disk type, multimedia card micro type, card type memory (e.g., SD and XD memories), random-access memory (RAM), static random-access memory (SRAM), read-only memory (ROM), electronically erasable programmable read-only memory (EEPROM), programmable read-only memory (PROM), magnetic memory, magnetic disk, and optical disk.

The processor 140 may control an overall operation of the display device 100. For example, the processor 140 may perform the function of the display device 100 described herein by executing one or more instructions stored in the memory 130.

In an embodiment of the present disclosure, the processor 140 may store one or more instructions in an internal memory thereof and may execute the one or more instructions stored in the internal memory to perform control such that the operations of the display device are performed. That is, the processor 140 may perform a certain operation by executing at least one instruction or program stored in the internal memory of the processor 140 or in the memory 130.

The receiver 180 may receive, for example, a video (e.g., moving image), an audio (e.g., voice and music), and additional information (e.g., EPG) from outside the display device 100 under the control by the processor 140. The receiver 180 may include one of a High-Definition Multimedia Interface (HDMI) port 181, a component jack 182, a PC port 183, and a USB port 184, or any combination thereof. In addition to the HDMI port 181, the receiver 180 may further include a display port (DP), Thunderbolt, and Mobile High-Definition Link (MHL).

Under the control by the processor 140, the video processor 150 may process a video signal received from the receiver 180 or the communicator 110 and output the resulting signal to the display 120.

Under the control by the processor 140, the audio processor 160 may convert an audio signal received from the receiver 180 or the communicator 110 into an analog audio signal and output the analog audio signal to the audio output unit 170.

The audio output unit 170 may output the audio (e.g., voice or sound) input through the communicator 110 or the receiver 180. Also, under the control by the processor 130, the audio output unit 170 may output the audio stored in the memory 130. The audio output unit 170 may include at least one of a speaker, a headphone output terminal, or a Sony/Philips Digital Interface (S/PDIF) output terminal, or any combination thereof.

The sensor 190 may sense a user's voice, a user's image, or a user's interaction and may include a microphone 191, a camera 192, and a light receiver 193.

The microphone 191 may receive the user's utterance voice. The microphone 191 may convert the received voice into an electrical signal and output the electrical signal to the processor 140. The user's voice may include, for example, a voice corresponding to the function or menu of the display device 100.

The camera 192 may receive an image (e.g., consecutive frames) corresponding to the user's motion including a gesture within a camera recognition range. Using the received motion recognition result, the processor 140 may select a menu displayed on the display device 100 or may perform a control corresponding to the motion recognition result.

The light receiver 193 may receive a light signal (including a control signal) received from the controller 200 thereoutside. The light receiver 193 may receive a light signal corresponding to a user input (e.g., touch, press, touch gesture, voice, or motion) from the controller. The control signal may be extracted from the received light signal under the control by the processor 140.

The processor 140 may control an overall operation of the display device 100 and a signal flow between the internal components (not illustrated) of the display device 100 and perform a data processing function. When there is a user's input or a preset stored condition is satisfied, the processor 140 may execute various applications and an operating system (OS) stored in the memory 140.

The processor 140 may include a graphic processor (graphic processing unit) (not illustrated) for graphic processing corresponding to video. The graphic processing unit (not illustrated) may generate a screen including various objects such as icons, images, and texts using an operation unit (not illustrated) and a rendering unit (not illustrated). The operation unit may calculate an attribute value such as a coordinate value, a shape, a size, and a color to be displayed for each of the objects according to the layout of the screen using the user input sensed through a sensing unit (not illustrated). The rendering unit may generate a screen of various layouts including objects based on the attribute value calculated by the operation unit.

The memory 130 may store a program related to the operation of the display device 100 and various data generated during the operation of the display device 100.

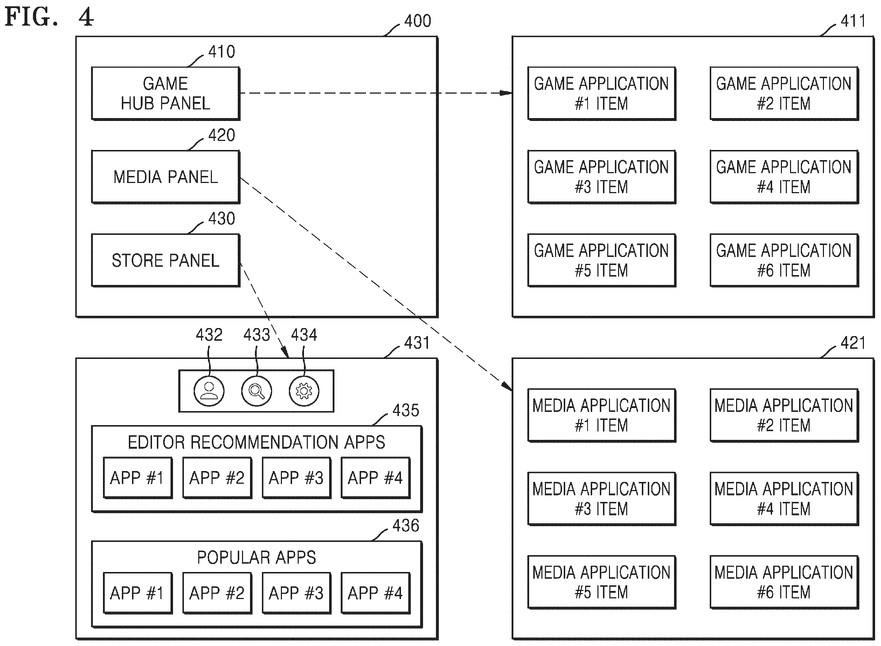

FIG. 4 is a diagram illustrating an example of a screen provided by a display device according to various embodiments.

Referring to FIG. 4, a main screen 400 provided by the display device 100 may include a game hub panel 410, a media panel 420, and a store panel 430.

The game hub panel 410 may correspond to one or more game applications whose category is game. When an input for selecting the game hub panel 410 is received, the display device 100 may enter a gaming hub home screen 411. The gaming hub home screen 411 may include one or more game application items. For example, the gaming hub home screen 411 may include a game application #1 item, a game application #2, a game application #3, a game application #4 item, a game application #5, and a game application #6. A game application item may refer to an item for starting execution of a game application. When an input for selecting the game application item is received, the display device 100 may execute the game application.

The media panel 420 may correspond to one or more media applications whose category is media. When an input for selecting the media panel 420 is received, the display device 100 may enter a media content home screen 421. The media content home screen 421 may include one or more media application items. For example, the media content home screen 421 may include a media application #1 item, a media application #2, a media application #3, a media application #4 item, a media application #5, and a media application #6. A media application item may refer to an item for starting execution of a media application. When an input for selecting the media application item is received, the display device 100 may execute the media application.

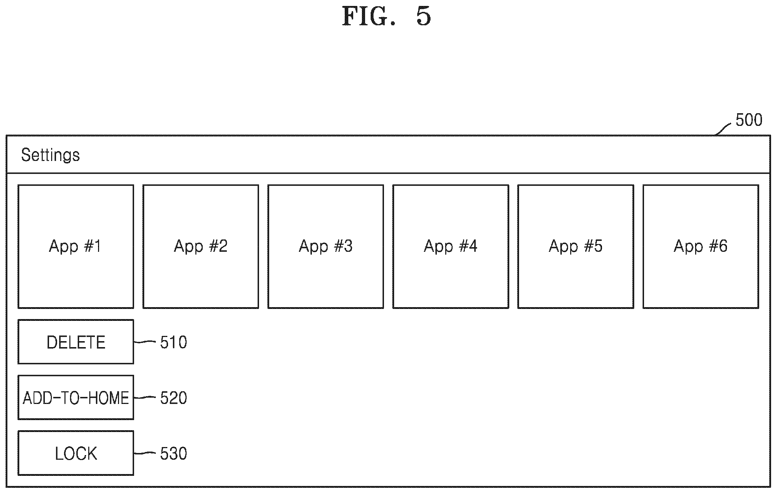

The store panel 430 may correspond to a screen for downloading an application. When an input for selecting the store panel 430 is received, the display device 100 may enter an application home screen 431. The application home screen 431 may include a user account item 432 for allowing to move to a user account screen to log out or add an account, an app search item 433 for allowing to search for an available application, a setting item 434 for allowing to manage an installed application, one or more editor recommendation app items 435, and one or more popular app items 436. For example, when an input for selecting installation of an application is received, the display device 100 may transmit a download request for the application to the server device 300 and receive and install the application from the server device 300 in response to the download request. The setting item 434 will be described in detail with reference to FIG. 5.

FIG. 5 is a diagram illustrating an example of a user interface capable of managing one or more applications downloaded and installed according to various embodiments.

Referring to FIG. 5, a setting home screen 500 may be an example of a user interface that a display device 100 may display when receiving an input for selecting the setting item 434 illustrated in FIG. 4.

The setting home screen 500 may display items corresponding to one or more applications downloaded and installed by the display device 100. For example, in FIG. 5, App#1, App#2, App#3, App#4, App#5, and App#6 are illustrated as the downloaded and installed applications. For an item corresponding to each application, a menu capable of managing the application may be further provided. For example, a delete item 510, an add-to-home item 520, and a lock item 530 may be provided corresponding to an App#1 item.

The delete item 510 may refer to an item for allowing to delete the application.

The add-to-home item 520 may refer to an item for allowing the application to be added to a home screen. The home screen may represent a hub application or a media home application that has the same category as the application. For example, when App#1 corresponds to the game category, the game hub application may be the home screen. In this case, when the hub application of the category corresponding to the application is activated, the display device 100 may add the application to both the hub application and the media home application of the same category. When the hub application of the category corresponding to the application is not activated, the display device 100 may add the application to the media home application.

The lock item 530 may refer to an item for allowing the application to be locked or unlocked. Locking the application may refer, for example, to requiring a password to be input to execute the application, and unlocking the application may refer, for example, to the application being executed without inputting a password.

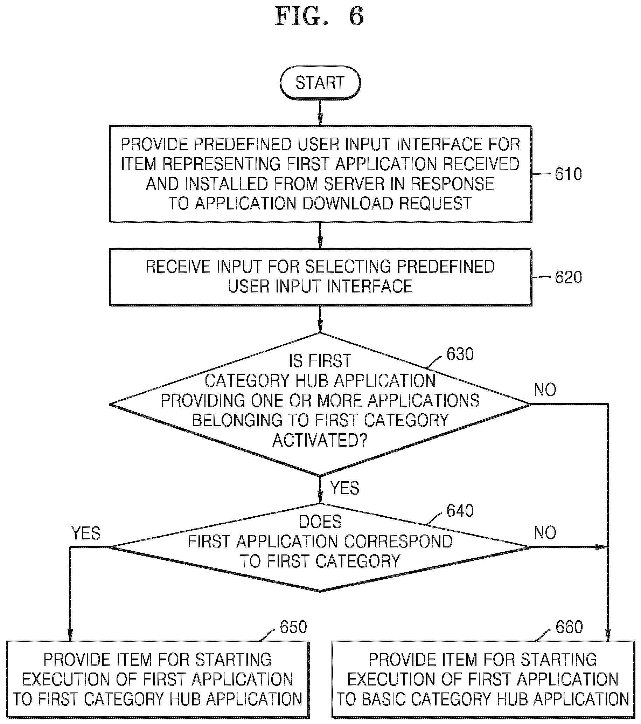

FIG. 6 is a flowchart illustrating an example method of operating a display device according to various embodiments.

Referring to FIG. 6, in operation 610, the display device 100 may provide a predetermined (e.g., specified) user input interface for an item representing a first application received and installed from a server device according to an application download request.

According to an embodiment, the display device 100 may receive a user input for requesting download of the first application and transmit a download request for the first application to the server device 300 according to the user input. According to the download request, the display device 100 may receive and install the first application from the server device 300 . For example, the display device 100 may provide an item corresponding to the downloaded and installed first application, to the setting home screen 500 illustrated in FIG. 5.

According to an embodiment, the display device 100 may provide a predetermined user input interface for an item representing the first application. For example, the display device 100 may provide the add-to-home item 520 as the predetermined user input interface as illustrated in FIG. 5.

In operation 620, the display device 100 may receive an input for selecting the predetermined user input interface. For example, the display device 100 may provide an input for selecting the add-to-home item 520 as the predetermined user input interface as illustrated in FIG. 5.

In operation 630, the display device 100 may identify whether a first category hub application providing one or more applications belonging to a first category is activated. That the first category hub application is activated may refer, for example, to the first category hub application being installed in the display device 100 and being in an executable state. The first category hub application may be installed when the display device 100 is manufactured, or may be downloaded and installed through a server or the like after the display device 100 is sold. That the first category hub application is in an executable state may refer, for example, to the display device satisfying a condition for providing a service through the first category hub application, that is, a state in which the first category hub application is set to be executable. For example, a service may be selectively provided through the first category hub application depending on the area or country where the display device 100 is installed, and thus, the first category hub application may be set to be executable or inexecutable depending on the area or country where the display device 100 is installed. For example, when the first category hub application is installed in the display device 100 and the display device 100 is installed in an area or country where the service through the first category hub application may be provided and thus the first category hub application is set to be executable, the first category hub application may be identified as being activated. For example, when the first category hub application is installed in the display device 100 and the display device 100 is installed in an area or country where the service through the first category hub application is not provided and thus the first category hub application is set to be inexecutable, the first category hub application may be identified as being deactivated.

According to an embodiment, the display device 100 may identify whether the first category hub application is activated, based on information about the installation area or country of the display device 100.

In order to receive and play digital broadcast, the display device 100 may need to perform initial setting before start of the use thereof after installation of the display device 100. When recognizing that the power supply has been turned on while the initial setting has not yet been performed, the display device 100 may display an initial setting start screen on the display.

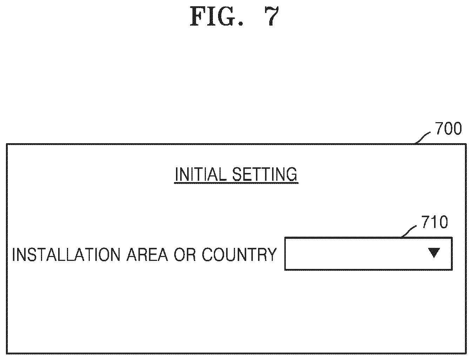

FIG. 7 is a diagram illustrating an example of an initial setting screen according to various embodiments.

Referring to FIG. 7, an initial setting screen 700 may include an area setting screen. The area setting screen may guide the user to select an installation area or country 710 of the display device 100 for channel registration of digital broadcast. When recognizing that an installation area or an installation country has been selected, the display device 100 may set the area as an area of digital broadcast and store the information thereof in the memory.

Thus, the display device 100 may identify whether the first category hub application is activated, based on the information about the installation country or installation area stored in the memory. This may be because the first category hub application may or may not be activated depending on the installation country or installation area of the display device 100. For example, when the installation country is Korea, the first category hub application may be activated, but when the installation country is Vietnam, the first category hub application may not be activated. The display device 100 may store information about the area or country in which the first category hub application is activated. Thus, the display device 100 may identify whether the first category hub application is activated in the display device 100, using information about the area or country in which the first category hub application is activated and information about the country or area in which the display device 100 is installed.

According to an embodiment, the display device 100 may identify whether the first category hub application is activated, based on model information of the display device 100. The first category hub application may not be activated in all display devices manufactured by the manufacturer of the display device 100 but may be activated in a particular model. According to an embodiment, the display device 100 may store information about models in which the first category hub application is activated. According to an embodiment, the display device 100 may identify whether the first category hub application is activated, by identifying whether the model information of the display device 100 corresponds to information about models in which the first category hub application is activated.

According to an embodiment, the display device 100 may identify whether the first category hub application is activated, based on model information and installation area or country information of the display device 100. That is, the display device 100 may identify that the first category hub application is activated, when the display device 100 corresponds to a particular model in which the first category hub application is activated and the display device 100 is installed in a particular area or country.

According to an embodiment, the display device 100 may identify whether the first category hub application is activated, based on user setting in addition to the model information and installation area or country information of the display device 100. For example, even when the model information and installation country or installation area information of the display device 100 indicate that the first category hub application is activated, when the first category hub application is set to be deactivated according to a user selection, the display device 100 may identify that the first category hub application is not activated.

Referring back to FIG. 6, as a result of the determination in operation 630, when the first category hub application is not activated, the process may proceed to operation 660.

In operation 660, because the first category hub application is not activated, the display device 100 may provide an item for starting execution of the first application to the basic category hub application. For example, the display device 100 may provide an item for starting execution of the first application, to the media panel 420 in the screen illustrated in FIG. 4.

As a result of the determination in operation 630, when the first category hub application is activated, the process may proceed to operation 640.

In operation 640, the display device 100 may identify whether the first application corresponds to the first category.

According to an embodiment, the display device 100 may identify whether the first application corresponds to the first category, by identifying whether the attribute or type of the first application belongs to the first category. The display device 100 may identify the genre, which is one of the attribute information of the application, and identify whether the identified genre corresponds to the first category.

According to an embodiment, the display device 100 may identify whether the first application corresponds to the first category, by identifying whether the first application provides metadata to the first category hub application. That is, based on the attribute information of the first application itself, the display device 100 may identify that the first application corresponds to the first category, when the first application provides metadata to the first category hub application even when the first application does not correspond to the first category.

According to an embodiment, using the attribute information of the first application, the display device 100 may identify whether the first application is an application that provides metadata to the first category hub application. The attribute information of the application may be identified by asking a management server that manages application attribute information. When releasing an application, an application provider may provide attribute information of the application to the management server.

The application provides metadata to the first category hub application may refer, for example, to the application providing any form of content or data thereto. For example, when the first category is a game, it may refer, for example, to the first application itself not being a game app but providing any form of content or data to the first category hub application. For example, a particular content provider app such as YouTube, Twitch, or Netflix may have various channels therein and may provide game-related content, game channels, game-related data, or the like to a game-specific application in the various channels. The particular content provider app may have attribute information indicating that it is an app that provides metadata to the first category hub application.

As a result of the determination in operation 640, when it is identified that the first application corresponds to the first category, the process may proceed to operation 650.

In operation 650, when it is identified that the first application corresponds to the first category, the display device 100 may provide an item for starting execution of the first application to the first category hub application.

According to an embodiment, when it is identified that the first application corresponds to the first category, for example, when it is identified that the attribute of the first application belongs to the first category or that the first application provides metadata to the first category hub application, the display device 100 may provide an item for starting execution of the first application to the first category hub application. For example, the display device 100 may arrange an item for starting execution of the first application in the gaming hub home screen 411 illustrated in FIG. 4.

According to an embodiment, when it is identified that the first application corresponds to the first category, for example, when it is identified that the attribute of the first application belongs to the first category or that the first application provides metadata to the first category hub application, the display device 100 may provide an item for starting execution of the first application not only to the first category hub application but also to the basic category hub application. For example, the display device 100 may arrange an item for starting execution of the first application in both the gaming hub home screen 411 and the media content home screen 421 illustrated in FIG. 4.

According to an embodiment, when it is identified that the attribute of the first application belongs to the first category, the display device 100 may provide an item for starting execution of the first application to the first category hub application, and when it is identified that the first application provides metadata to the first category hub application, the display device 100 may provide an item for starting execution of the first application not only to the first category hub application but also to the basic category hub application. For example, when it is identified that the attribute of the first application belongs to the first category, the display device 100 may arrange an item for starting execution of the first application in the gaming hub home screen 411 illustrated in FIG. 4. Also, when it is identified that the first application provides metadata to the first category hub application, the display device 100 may arrange an item for starting execution of the first application in both the gaming hub home screen 411 and the media content home screen 421 illustrated in FIG. 4.

As a result of the determination in operation 640, when it is identified that the first application does not correspond to the first category, the process may proceed to operation 660.

In operation 660, the display device 100 may provide an item for starting execution of the first application to the basic category hub application. For example, the display device 100 may arrange an item for starting execution of the first application in the media content home screen 421 illustrated in FIG. 4.

According to an embodiment, a method of operating a display device may include identifying whether a first category hub application providing one or more applications belonging to a first category is activated.

According to an embodiment, the method may include providing a predetermined user input interface for an item representing a first application received and installed from a server according to an application download request.

According to an embodiment, the method may include identifying, in response to receiving an input for selecting the predetermined user input interface, whether the first application corresponds to the first category.

According to an embodiment, the method may include providing, in response to identifying that the first category hub application is activated and that the first application corresponds to the first category, an item for starting execution of the first application to the first category hub application.

According to an embodiment, the method may further include identifying that the first category hub application is activated, when installation country information of the display device represents predetermined country information and/or product model information of the display device represents predetermined model information.

According to an embodiment, the method may further include identifying whether the first application corresponds to the first category, based on attribute information of the first application.

According to an embodiment, the method may further include identifying that the first application corresponds to the first category, when attribute information of the first application corresponds to the first category.

According to an embodiment, the method may further include identifying that the first application corresponds to the first category, when attribute information of the first application indicates that the first application provides metadata for content executable in the first category hub application to the first category hub application.

According to an embodiment, the method may further include requesting attribute information of the first application from the server and obtaining the attribute information of the first application by receiving the attribute information of the first application from the server according to the request.

According to an embodiment, the method may further include providing, in response to identifying that the first category hub application is not activated or that the first application does not correspond to the first category, an item for starting execution of the first application to a basic category hub application.

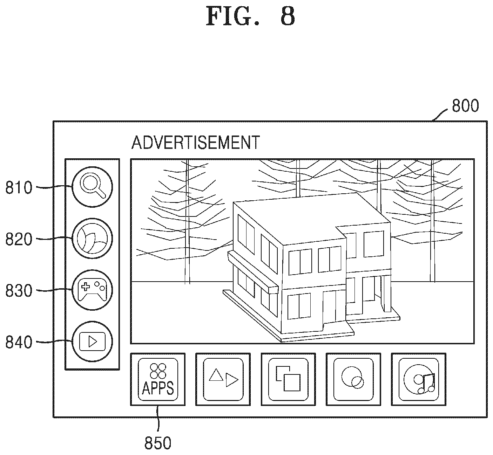

FIG. 8 is a diagram illustrating an example of a home screen of a display device for providing a game hub application in which a first category is a game, according to various embodiments.

Referring to FIG. 8, a home screen 800 of the display device according to an embodiment may include a search item 810, a magic screen item 820, a game panel item 830, a media panel item 840, and an app item 850. The home screen 800 illustrated in FIG. 8 may be displayed by the display device 100 when a home button of a controller is received.

The search item 810 may represent an interface for allowing to search for a channel, a program, a movie title, or an app provided by a server.

The magic screen item 820 may represent an interface for allowing to output content harmonized with the surrounding environment or life information such as weather and time on the screen when video content is not viewed through the display device.

The game panel item 830 may represent an interface for allowing the users to select and execute a game on a game streaming platform provided by the display device 100. The game streaming platform may support directly playing the recent/popular games in a single gaming hub by accessing Cloud, game consoles, or the like.

The media panel item 840 may represent an interface for allowing to watch various TV programs and to install various apps such as videos, music, sports, and games provided from the server and use the same in the display device 100.

The app item 850 may represent an interface for allowing to install various apps such as videos, music, sports, and games provided from the server.

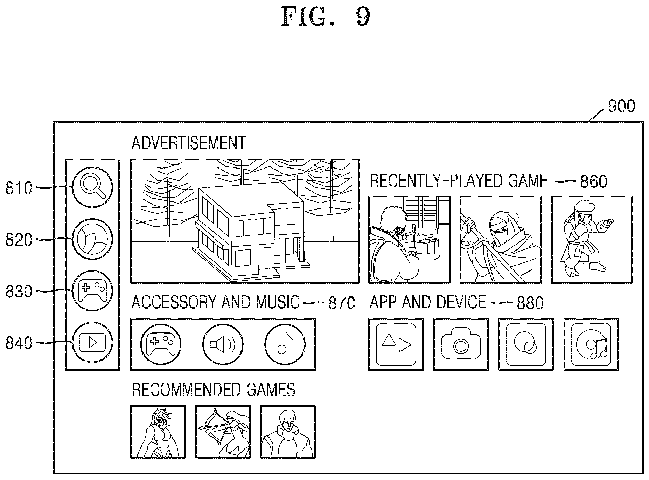

FIG. 9 is a diagram illustrating an example of a gaming hub screen that may be displayed when a game home item is selected, according to various embodiments.

Referring to FIG. 9, a gaming hub screen 900 may provide an interface for providing more convenience and increasing game immersion when the users play a console game or a cloud game.

The gaming hub screen 900 may include a recently-played game list 860. The recently-played game list 860 may show most recently played cloud games through the gaming hub.

The gaming hub screen 900 may include an accessory and music item 870. The accessory and music item 870 may represent an interface for allowing to select a controller to be connected to the display device 100, to select an audio device to be connected to the display device 100, or to provide a music service for managing music played while playing a game.

The gaming hub screen 900 may include an app and device item 880. The app and device item 880 may represent an interface for allowing to manage an application and a device for playing a game on the display device 100.

For example, when the user downloads a game application or an application providing metadata to the gaming hub, the display device 100 may identify whether the gaming hub application is activated, and when the gaming hub application is activated, may arrange, on at least a portion of the gaming hub screen 900, an item for starting execution of the application downloaded and installed by the user.

Some embodiments may also be implemented in the form of computer-readable recording mediums including instructions executable by computers, such as program modules executed by computers. The computer-readable recording mediums may be any available mediums accessible by computers and may include both volatile and non-volatile mediums and detachable and non-detachable mediums. Also, the computer-readable recording mediums may include computer storage mediums. The computer storage mediums may include both volatile and non-volatile and detachable and non-detachable mediums implemented by any method or technology for storage of information such as computer-readable instructions, data structures, program modules, or other data.

The described embodiments may be implemented as S/W programs including instructions stored in computer-readable storage mediums.

The computer may be a device capable of calling instructions stored in a storage medium and performing an operation according to the described embodiment according to the called instructions and may include the electronic device according to the embodiments.

The computer-readable storage medium may be provided in the form of a non-transitory storage medium. Here, "non-transitory" may merely mean that the storage medium does not include signals and is tangible, but does not distinguish semi-permanent or temporary storage of data in the storage medium.

Also, the control method according to the described embodiments may be included and provided in a computer program product. The computer program product may be traded as a product between a seller and a buyer.

The computer program product may include a S/W program and a computer-readable storage medium with a S/W program stored therein. For example, the computer program product may include products in the form of S/W programs (e.g., downloadable apps) electronically distributed through manufacturers of devices or electronic markets (e.g., Google Play Store and App Store). For electronic distribution, at least a portion of the S/W program may be stored in a storage medium or may be temporarily generated. In this case, the storage medium may be a storage medium of a server of a manufacturer, a server of an electronic market, or a relay server for temporarily storing the S/W program.

In a system including a server and a device, the computer program product may include a storage medium of the server or a storage medium of the device. Alternatively, when there is a third device (e.g., a smartphone) communicatively connected to the server or the device, the computer program product may include a storage medium of the third device. Alternatively, the computer program product may include the S/W program itself that is transmitted from the server to the device or the third device or transmitted from the third device to the device.

In this case, one of the server, the device, and the third device may execute the computer program product to perform the method according to the described embodiments. Alternatively, two or more of the server, the device, and the third device may execute the computer program product to perform the method according to the described embodiments in a distributed manner.

For example, the server (e.g., a cloud server or an artificial intelligence server) may execute the computer program product stored in the server, to control the device communicatively connected to the server to perform the method according to the described embodiments.

As another example, the third device may execute the computer program product to control the device communicatively connected to the third device to perform the method according to the described embodiments. When the third device executes the computer program product, the third device may download the computer program product from the server and execute the downloaded computer program product. Alternatively, the third device may perform the method according to the described embodiments by executing the computer program product provided in a preloaded state.

Also, herein, the "unit" may include a hardware component such as a processor or a circuit and/or a software component executed by a hardware component such as a processor.

The foregoing descriptions of the present disclosure are merely examples, and those of ordinary skill in the art will readily understand that various modifications may be made therein without materially departing from the spirit or features of the present disclosure. Therefore, it is to be understood that the embodiments described above should be considered in a descriptive sense only and not for purposes of limitation. For example, each component described as a single type may also be implemented in a distributed manner, and likewise, components described as being distributed may also be implemented in a combined form.

The scope of the present disclosure is defined not by the above detailed description but by the following claims, and all modifications derived from the meaning and scope of the claims and equivalent concepts thereof should be construed as being included in the scope of the present disclosure.

## Claims

1. A display device comprising:
memory storing one or more instructions; and
a processor configured to execute the one or more instructions stored in the memory,
wherein the processor is configured to execute the one or more instructions to:
identify whether a first category hub application providing one or more applications belonging to a first category is activated;
provide a specified user input interface for an item representing a first application received and installed from a server according to an application download request;
identify, in response to receiving an input for selecting the specified user input interface, whether the first application corresponds to the first category; and
provide, in response to identifying that the first category hub application is activated and that the first application corresponds to the first category, an item for starting execution of the first application to the first category hub application.

2. The display device of claim 1, wherein the processor is further configured to execute the one or more instructions to identify that the first category hub application is activated based on installation country information of the display device representing specified country information and/or product model information of the display device representing specified model information.

3. The display device of claim 1 or 2, wherein the processor is further configured to execute the one or more instructions to identify whether the first application corresponds to the first category based on attribute information of the first application.

4. The display device of any one of claims 1 to 3, wherein the processor is further configured to execute the one or more instructions to identify that the first application corresponds to the first category based on attribute information of the first application corresponding to the first category.

5. The display device of claim 1 or 2, wherein the processor is further configured to execute the one or more instructions to identify that the first application corresponds to the first category based on attribute information of the first application indicating that the first application provides metadata for content executable in the first category hub application to the first category hub application.

6. The display device of any one of claims 1 to 5, wherein the processor is further configured to execute the one or more instructions to:
request attribute information of the first application from the server; and
obtain the attribute information of the first application in response to receiving the attribute information of the first application from the server according to the request.

7. The display device of any one of claims 1 to 6, wherein the processor is further configured to execute the one or more instructions to provide, in response to identifying that the first category hub application is not activated or that the first application does not correspond to the first category, an item for starting execution of the first application to a basic category hub application.

8. An operating method of a display device, the operating method comprising: identifying whether a first category hub application providing one or more applications belonging to a first category is activated;
providing a specified user input interface for an item representing a first application received and installed from a server according to an application download request;
identifying, in response to receiving an input for selecting the specified user input interface, whether the first application corresponds to the first category; and
providing, in response to identifying that the first category hub application is activated and that the first application corresponds to the first category, an item for starting execution of the first application to the first category hub application.

9. The operating method of claim 8, further comprising identifying that the first category hub application is activated based on installation country information of the display device representing specified country information and/or product model information of the display device representing specified model information.

10. The operating method of claim 8 or 9, further comprising identifying whether the first application corresponds to the first category based on attribute information of the first application.

11. The operating method of any one of claims 8 to 10, further comprising identifying that the first application corresponds to the first category based on attribute information of the first application corresponding to the first category.

12. The operating method of claim 8 or 9, further comprising identifying that the first application corresponds to the first category based on attribute information of the first application indicating that the first application provides metadata for content executable in the first category hub application to the first category hub application.

13. The operating method of any one of claims 8 to 12, further comprising requesting attribute information of the first application from the server and obtaining the attribute information of the first application by receiving the attribute information of the first application from the server according to the request.

14. The operating method of any one of claims 8 to 13, further comprising providing, in response to identifying that the first category hub application is not activated or that the first application does not correspond to the first category, an item for starting execution of the first application to a basic category hub application.

15. A computer-readable recording medium having recorded thereon one or
more programs executed by a processor of a display device to implement an operating method of the display device, the operating method comprising:
identifying whether a first category hub application providing one or more applications belonging to a first category is activated;
providing a specified user input interface for an item representing a first application received and installed from a server according to an application download request;
identifying, in response to receiving an input for selecting the specified user input interface, whether the first application corresponds to the first category; and
providing, in response to identifying that the first category hub application is activated and that the first application corresponds to the first category, an item for starting execution of the first application to the first category hub application.
